# EUROPEAN PATENT APPLICATION

(11) **EP 0 661 604 A2**
(43) Date of publication of application: **05.07.1995**
(21) Application number: 95300006.4
(22) Date of filing: 03.01.1995
(51) Int. Cl.: G03G 15/00, H04N 1/00

(54) **Copy sheet size detection device**

(30) Priority: 03.01.1994 US 176988
(71) Applicant: XEROX CORPORATION, Rochester New York 14644 (US)
(72) Inventor: Wafler, Walter F., Rochester NY 14625 (US); Wenthe, Stephen J.,Jr., West Henrietta, NY 14586 (US)
(74) Representative: Reynolds, Julian David

(57) **Abstract**

A device and method for selecting or detecting copy sheet size, resizing a copy and other operations using an image input scanner (114; Fig.1) and/or an edit pad. The various copy sheet selections and detections made may be used to select sheets (125; Fig.1) from various copy sheet trays in a printing machine (Fig.6). In the case of non-standard sheet sizes, the copy sheet path, sheet gripper timing, image transfer and other aspects of copy sheet handling and printing may be automatically modified according to the copy sheet size detection system of the present invention. Copy sheet path sensors and processors controlling them in a printer can be automatically reprogrammed so as to prevent misfeeds or misfeed indications resulting from varied copy sheet sizes being used in the printing machine. The edit pad may detect a two dimensional rectangular area (Fig.4) of a copy sheet according to designation of a single input point on an edit pad. A processor (102; Fig.1) determines a rectangle size according to a predetermined base point at the intersection of the x-y axis, an individual x point on the x axis, the input point and an individual y point on the y axis. An image input scanner (114; Fig.1) may also be used alone or in combination with an edit pad for detecting a length and width of a copy sheet. The width of the sheet may be detected by fast scan direction sensing at a normal or reduced resolution. The length of the sheet may be detected by normal or reduced resolution slow scan direction sensing, or by multiplying the duration between the passing of the lead and trail edge of the sheet moving past the image input scanner (not moving in a process direction) times a predetermined constant velocity of the sheet.

## Description

The present invention relates to a sheet size input/detection device, and more particularly to a system for quickly selecting and/or detecting the size of a copy sheet using an input pad, document feeder and/or scanner.

User-machine interface devices are useful in a broad range of applications when providing machine instructions to a multifunctional and adjustable copying and/or printing device. In electrophotographic applications such as xerography, users may wish to reduce, enlarge, edit or otherwise modify an image, input or output size, as well as adjust and modify a variety of other machine parameters. Known input devices such as pushbuttons, keyboards, edit pads and other devices may offer limited user options and may prolong and complicate the implementation of a desired set of copy sheet sizing selections or detections. For example, if an operator wishes to resize an image to fit a particular sheet or area on a sheet, known pushbuttons may require a user to calculate or guess the percent reduction or enlargement required, while input pads may require the operator to make multiple inputs to achieve the desired result. Graphics, design, and analytical implementations (such as construction/engineering applications, oversize or undersize documents, perspective renderings, etc.) are just a few examples of situations in which difficulties can arise when operators may be undesirably forced to use pushbuttons or known two dimensional input devices.

In situations employing scanners, to include those having automatic document feeders, the task of resizing a copy or determining the size of an unusually sized copy sheet, a user may be required to physically measure the copy sheet or employ a specialized set of sensors to assess the size of a sheet to receive a printed image. Thereafter, the copy sheet path of the printer may malfunction due to the non-standard copy sheet size, or require time-consuming reprogramming. In digital printer or copier applications, an existing scanner would desirably be adapted to detect sheet size in the time it takes to run a sheet through a document feeder or less and to translate sheet size to be inputs into suitable signals. Such a sheet size detection device could use an unmodified or slightly modified raster input scanner controlled by an electronic subsystem. In this manner, the various original copy and sheet and image sizing characteristics desired by an operator may preferably be inputted to the printer using an edit pad and/or the existing sensor array in a digital scanner. Rather than requiring multiple edit pad entries, special sensors or conventional scanning of the sheet, a system capable of expediting and adding flexibility to image and sheet sizing inputs and outputs is desired.

Various approaches have been employed to input copy information into a device using an input or edit pads, and document feeders and/or scanners.

US-A-5,198,853 to Ichihara et al. discloses a document size detector for detecting a size of a document in use with a document scanner. The document size detector has an irradiator to irradiate the document with a light beam; a cover of the document; a receiver of the reflection light from the document and the cover; a converter to convert the reflection light to image signals; a detector to detect the shadow of the document on the cover in the image signals; and the determiner to determine the size of the document according to the detected shadow of the document.

US-A-5,170,348 to Hirose discloses an alphanumeric character input device includes a character input panel located on a planar top surface of a flat housing. The character input panel includes a plurality of character input pads each having indicia thereon corresponding to alphanumeric characters. A plurality of switches are provided for activating in response to pressure applied to the character input pads. A contact pen having an elongated shape and a rounded end point is provided for contacting the character input pads. A display device and memory are provided for respectively displaying and storing alphanumeric characters inputted using the contact pen and the character inputs pads of the character panel.

US-A-4,713,550 to Anzai et al. discloses a document size detection apparatus having a plurality of sensor portions including light emitting devices and photodetector devices disposed in the vicinity of an original table for detecting the size of a document such as an original mounted on the original table is disclosed. This apparatus uses reflected light or transmitted light, a comparator for comparing the output level of the sensor portion with a reference level, and decision means for deciding the document size depending on the output signal of the comparator. The document size detection apparatus comprises a circuit for changing the reference level of the comparator and for detecting the resultant output of the comparator in order to find the condition in which the reference level becomes equal to the output level of the sensor portion and a storage circuit for storing the value representing that condition, which are used in the adjustment mode without a document mounted on the original table, and a reference level setting circuit for setting the reference level to be input to the comparator depending on the value stored in the storage circuit, which is used in the document size decision mode for detecting the size of a document mounted on the table.

US-A-4,739,369 to Yoshiura et al. discloses a document size detection apparatus having a sensors in an original document circulating device. A stack of original documents may be placed in an original document tray. Sheet sizing is determined during document feeding by a plurality of sensors positioned perpendicular to the original document sheet transport direction.

In accordance with one aspect of the present invention, there is provided a printing system adapted to print indicia on sheets. The printing system includes a sheet feeder having a stack of the sheets and a printer adapted to receive the sheets from the sheet feeder. The printing system also includes an input means, located remotely from the sheet feeder, for determining the sheet size of one of the sheets. The printer is responsive to the sheet size determined by the inputting means for printing the indicia on the sheets.

In accordance with another aspect of the present invention, there is provided a method of printing indicia on sheets using a printing system, said comprising a sheet feeder having a stack of the sheets, including the steps of:
receiving the sheets from said sheet feeder; and
determining the sheet size of one of the sheets, said printer being responsive to the sheet size determined by said inputting means for printing the indicia on the sheets.

The present invention will be described in detail with reference to the following drawings, in which like reference numerals are used to refer to like elements, and in which:
Figure 1 is an elevational view, partially in section, of a scanner and document feeder incorporating features of the present invention;
Figure 2 is a block diagram of one embodiment of the present invention;
Figure 3 is an overhead view of another embodiment of the sheet/image sizing edit pad of the present invention;
Figure 4 is another overhead view of the Figure 3 sheet/image sizing edit pad of the present invention;
Figure 5A is a block diagram of another embodiment of the system of the present invention;
Figure 5B is a block diagram of another embodiment of the system of the present invention;
Figure 5C is a block diagram of still another embodiment of the system of the present invention; and
Figure 6 is a schematic elevational view showing an exemplary electrophotographic printing machine which may incorporate features of the present invention therein.

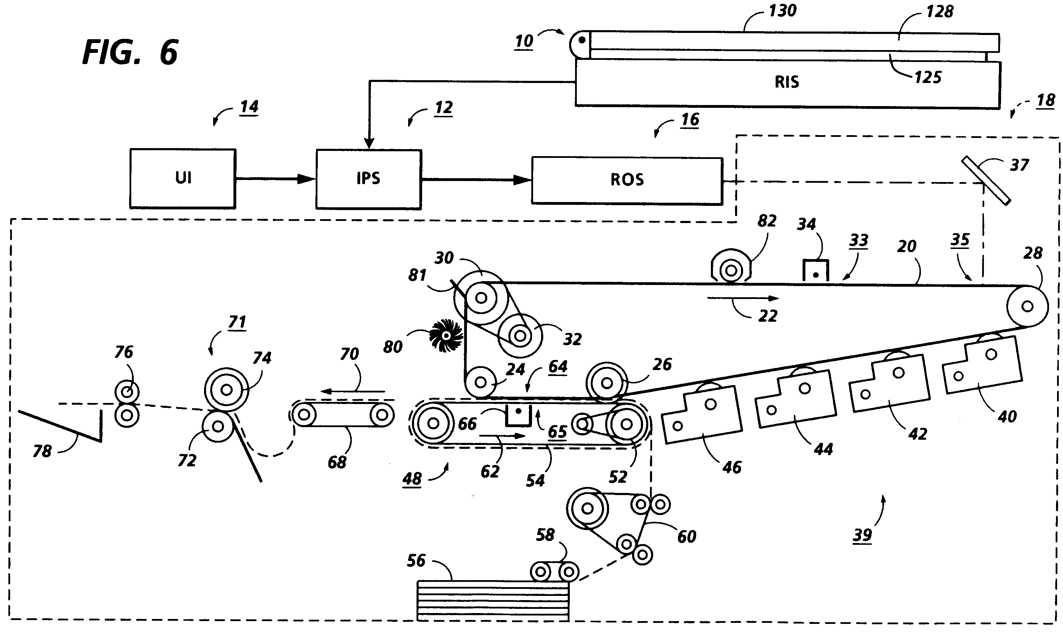

To begin by way of general explanation, Figure 6 is a schematic elevational view showing an electrophotographic printing machine which may incorporate features of the present invention therein. It will become evident from the following discussion that the present invention is equally well suited for use in a wide variety of copying and printing systems as well as many other data input and feature selection applications, and is not necessarily limited in its application to the particular systems shown herein.

As the architecture of the printing machine of Fig.6 is well known in the art, a detailed description thereof has been omitted from the present disclosure. For further information, reference is made to USSN 08/176,988, a copy of which was filed with the present application, and in particular the description relating to Fig.6 thereof.

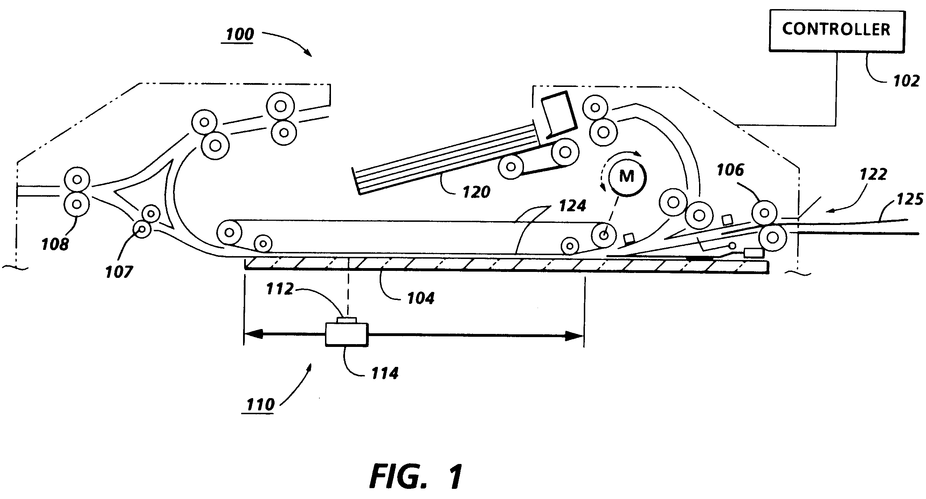

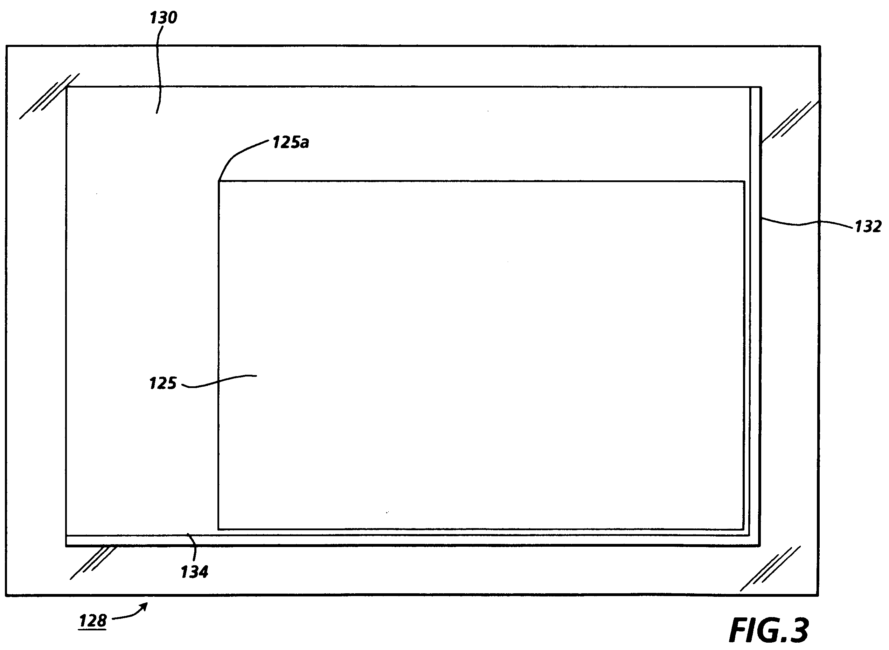

Figure 1 shows automatic document handling scanner 100, which includes the quick scan sheet size detection system of the present invention employed with electronic image scanning system 110. Scanner 100 may be mounted in any location, to include in place of RIS 10 as shown in Figure 6. Scanner 100 may be employed with an electrophotographic printing machine such as shown in Figure 6, or as a stand alone or printer peripheral scanning apparatus. Scanner 100 may also be employed with with an edit pad in sheet sizing detection/input, as later described in conjunction with Figures 3-4 and 5A-5C.

Image scanning system 110 as shown in Figure 1 has a primary function of digitally reading document images on the imaging platen 104. In embodiments of the present invention, this same electronic document image scanning system 110 may also used on command to quickly and automatically detect the size of a sheet 125 passing through the sheet path of scanner 100. As such, while image scanning system 110 is conventionally utilized for electronic imaging for a subsequent or integral printer, it may also be adapted according to the present invention to function as a high speed and convenient original document or copy substrate sizing device. The image scanning system shown in the Figure 1 example includes optical sensors 112 positioned on scanner array bar 114.

Scanning array bar 114 may be a conventional full width imaging bar, a scan head CCD sensor array, a single sensor operable to scan in a fast and slow scan direction, a color filtered sensor array, or other scanning system. Electronic sizing of the sheet/image, for integral or separate digital copying, printing, facsimile transmission, and/or other digital image processing, enhancement, and/or manipulation, is rapidly becoming more important and critical, as compared to prior conventional copying systems using light lens optical input, or the like. In each case, scanner array bar 114 is operable to optically span the width of the sheet path, and is movable in the slow scan direction (in the same direction as the sheet path) according to the arrows shown. Also, in this example, this disclosed document size detection system is an integral part of an exemplary integral plural mode sheet handling system of scanner 100 shown in Figure 1.

The particular sheet handling mechanism disclosed in the Figure 1 scanner 100 is one example of a document handler suitable for use with the subject quick scan document size detection system. Disclosed in this particular example is a dual mode document registration document handler in which documents are fed into sheet entry slot 122 of scanner 100 or stacked in the top of stacking tray 120 for feeding. Sheet 125 is fed in the process direction to transport rollers 106 (or from tray 120) to the upstream end of the platen transport belt 124 for movement across platen 104. Additional transport roller set 107 and other rollers sets move sheet 125 back to tray 120 or out of scanner 100 via transport roller set 108 after sheet 125 separates from transport belt 124 over platen 104. Transport belt 124 is powered by motor M, and is preferably synchronized with roller sets 104, 107 and 108 as well as other transport rollers which may be powered by roller M so as move sheet 125 without misfeed, slippage or damage. While various stationary sheet sensors along the movement path of sheet 125 may be employed in conjunction with this embodiment of the present invention, they are not necessary to detect the size of document 125.

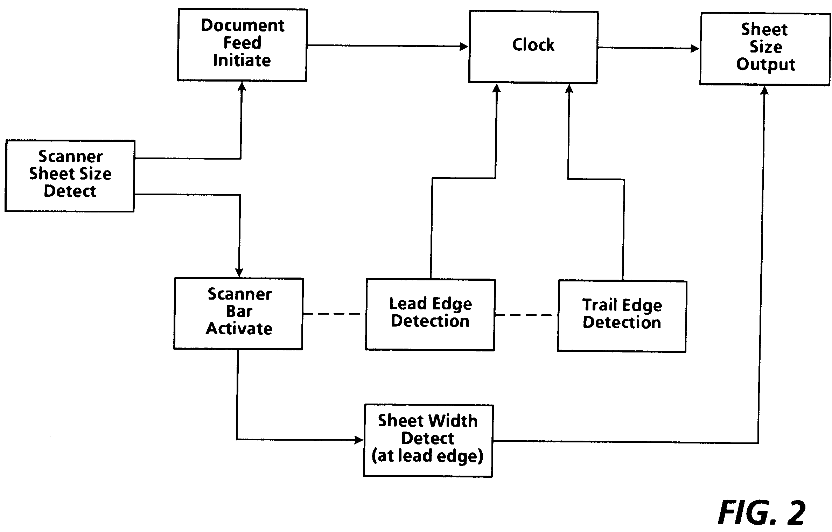

Image scanning system 110 scans from under the platen 104 with scanner array bar 114, which may be mounted on and reciprocally driven by a typical horizontal optical scanning carriage for movement in the process direction according to the arrows shown. Optical sensor(s) 112 on scanner array bar 114 are operable to scan an image in a fast scan (inboard/outboard) direction and in the slow scan (process) direction. In contrast to the requirements for scanning a document in both the fast and slow scan directions as required for full image scanning operations, in one embodiment of the present invention, image scanning system 110 need only be activated for scanning in the fast scan (inboard/outboard) direction in accordance with the present invention. As more fully described in conjunction with Figure 2, image scanning system 110 remains stationary in the process direction in this embodiment, and is able to detect sheet 125 width and length with only one dimensional (inboard/outboard) scanning. Optical sensors 112 on scanner array bar 114 detect the width (in the fast scan direction) of sheet 125 as it passes above on platen 104; when (as with many document feeders and scanners) the sheet passes along one edge of platen 104, as so as one or more sensors 112 detect an outboard corner of sheet 125, the width of sheet 125 is detected and outputted. At the same time, one or more optical sensors 112 detect the lead edge and then trail edge of sheet 125 at any point along scanner array bar 114 as sheet 125 passes overhead on platen 104 without stopping. A clock (not shown in Figure 1) integral with or separate from controller 102 determines the period of time "t" during which optical sensors 112 on scanner array bar 114 sense the presence of sheet 125 overhead. According to a predetermined movement rate (motor, sensor or otherwise determined and governed) of sheet 125 as moves in unison with transport belt 124, the velocity "v" of the sheet is known; by multiplying t times v, the length of sheet 125 is thereby determined. Unlike conventional full image sheet slow and fast direction scanning which may stop the sheet to be scanned from lead edge to trail edge by slow scan direction movement of scanner array bar 114, sheet 125 need not pause on platen 104 for size detection in the embodiment described above. Scanning array bar 14 may be positioned to sense sheet 125 as soon as the lead edge of sheet 125 arrives over a portion of platen 104, so that the sheet sizing output is available even before sheet 125 is finished moving across platen 104. Further, the fast scan direction resolution of the scanner may be greatly reduced (for example, by a factor of ten) further speeding up the sheet size detection operation.

The above-described quick scan sheet size detection system does not rely on precise (stop) positioning of the sheet 125 on platen 104, or risk transport belt/sheet 125 "stop and start" slippage than may lead to sheet length detection errors. In accordance with the present invention, the precise dimensions of sheet 125 are reliably determined as quickly as transport belt 124 of scanner 100 can move the sheet across scanner array bar 114 beneath platen 104; this transport belt 124/sheet 125 speed can be faster than the conventional sheet imaging movement speed, as there is no requirement to stop, position and then restart sheet 125. As sheet slippage can occur when the sheet must be stopped and then restarted on the platen, the constant movement of the sheet, from roller set 104 acquire to roller set 108 eject, can be higher than is otherwise permitted when conventional full image scanning stopping and starting of sheet 125 is required. The uniform constant movement by transport belt 124 of sheet 125 across platen 104 insures rapid and accurate sheet length detection by the system of the present invention. As described in association with Figure 6 above, the various copy sheet selections and detections of the present invention may be used to select sheets from copy sheet tray(s) 56. In the case of non-standard sheet sizes, the copy sheet path, sheet gripper timing, image transfer and other aspects of copy sheet handling and printing may be automatically modified according to the quick scan sheet size detection system of the present invention. Copy sheet path sensors (not shown) and processors controlling them may be reprogrammed so as to prevent misfeeds or misfeed indications resulting from a non-standard (or standard) copy sheet sizes being used in the printing machine.

In another embodiment of the present invention, as only sheet edge and not image is being determined in this quick scan sheet sizing mode, the scanning resolution of a sheet stationarily positioned on platen 104 may be greatly reduced. As such, the optical sensors 112 on scanner array bar 114 may complete the sheet sizing detection according to accelerated, reduced resolution scanning in the fast scan direction and in the slow scan direction as the sheet is positioned (or pauses) overhead; a document feeder system is also not required in this embodiment, as no movement of the sheet is required to detect sheet size. As such, more rapid sheet size detection is possible than with conventional full resolution image sheet scanning. Also in contrast to sheet size detection systems that require additional sensors, added processors or other hardware, the scanner sheet size detection system(s) of the present invention can be employed according to cost efficient modifications to many existing sheet scanning systems.

Further, the sheet size detection systems of the present invention may also be implemented in scanner, copier and/or facsimile machines that rely on movement of the sheet across a sensor-equipped scanner bar for process or slow scan direction imaging. In such applications, when machine cost may be even more critical, the sheet size detection system of the present invention may provide a cost effective solution to a sheet sizing requirement. Figure 1 may also be referred to to demonstrate such stationary scanner bar machines, as in contrast to the process direction movements of scanner array bar 114 on a carriage according to the arrows shown, scanning array bar 114 does not move in the slow scan direction. Rather, such systems rely on transport belts an/or rollers moving the sheet relative to a stationary scanner array bar 114 so as to scan the image on the sheet in the slow (process) scan direction. In such stationary scanner bar machines, one or more optical sensors 112 can detect the passage of the lead edge and then trail edge of sheet 125 at any point along scanner array bar 114 as sheet 125 passes overhead. A clock (not shown) in controller 102 determines the period of time "t" during which optical sensors 112 on scanner array bar 114 sense the presence of sheet 125 overhead. According to a predetermined movement rate (or motor/sensor determined) of sheet 125 as moves in unison with transport belts and/or rollers, the velocity "v" of the sheet is known; by multiplying t times v, the length of sheet 125 is thereby determined. In this manner, in such stationary scanner bar machines that do not stop and start the sheet on a platen, the precise length of sheet 125 may be reliably determined as quickly as the sheet can move past scanner array bar 114. As with the embodiment described above, the present invention in such stationary scanner bar machines can rely on conventional scanning by optical sensor(s) 112 on scanner array bar 114 to detect the width (in the fast scan direction) as sheet 125 passes by. In this manner, no or little additional hardware need be added to employ the the sheet size detection system of the present invention to many such stationary scanner bar machines.

In still another embodiment of the quick scan sheet detection system of the present invention as may be explained with reference to Figure 1, scanning system 110 quick scans sheet 125 in the conventional fast and slow scan directions to determine sheet width and length. In this embodiment, sheet 125 may be positioned on a platen equipped with or without a sheet feeder. As shown in Figure 1, scanner array bar 114 may be mounted on and reciprocally driven by a typical horizontal optical scanning carriage for movement in the process direction according to the arrows shown. Optical sensors 112 on scanner array bar 114 quick scan the sheet in a fast scan (inboard/outboard or sheet width) direction and a slow scan (process or sheet length) direction for the limited purpose of allowing controller 102 to determine sheet edges. An uncovered platen or darkened platen cover (not shown) may provide the contrast required for the edge of the sheet to be detected in the quick scan sheet sizing mode. As only sheet edge and not image is being determined in this quick scan sheet sizing mode, the scanning resolution required is greatly reduced. As such, the optical sensors 112 on scanner array bar 114 may complete the sheet sizing detection according to accelerated scanning in the fast and/or slow scanning directions, resulting in more rapid sheet size detection than is possible with conventional full resolution image sheet scanning.

Figure 2 shows a block diagram of the quick scan sheet size detection system of the present invention as may be employed with scanner 100 as described in conjunction with Figure 2 above. This sheet size detection system may be implemented using controller 102 in many conventional fixed or movable scanning bar systems. According to a user interface, pushbutton, or other selection means, "Scanner Sheet Size Detect" is selected by a user. With a sheet 125 is placed in the sheet entry slot 122 or feed tray 120 as shown in Figure 1, scanner array bar 114 may be activated (preferably for sheet width, lead edge and trail edge detection only), while document feeding via belts and/or rollers past the scanner array bar is initiated, as more fully described above in conjunction with Figure 1. Although sensors may be used to detect when sheet 125 has been placed in sheet entry slot 122 or sheet tray 120, such sensors are not required, as a user may be instructed to place a sheet either position (or in certain embodiments, directly on platen 104) before initiating the "Scanner Sheet Size Detect" mode. According to the embodiment of the present invention in which no slow scan direction movement of imaging system 110 is required, when the lead edge of the sheet passes the scanner array bar, a first signal is sent to a clock processor; when the trail edge of the sheet passes the scanner array bar, a second signal is sent to a clock processor; according to the time "t" between the first and and second signals, multiplied by a predetermined or sensed movement velocity "v" of the sheet, the length of the sheet output is provided. Also when the lead edge of the sheet passes the scanner array bar (or at any other point while the sheet is adjacent to the scanner array bar), the width of the sheet is detected according to an outer edge of the sheet, and the of sheet size output is provided.

In the embodiments described above in conjunction with Figure 1 above in which optical sensors 112 on scanner array bar 114 quick scan sheet 125 in a fast scan direction and in a slow scan direction, only reduced resolution sheet edge information is required to determine sheet size. For example, when the scanner normally operates in at 600 spots per inch resolution, an accelerated scan may be made so as reduce this resolution to only 50 spots per inch for purposes of determining sheet edges. In this manner, the edges of the sheet to within approximately 1/50th of an inch are detected. As such, this embodiment permits sheet length and width information to be rapidly processed in an abbreviated/reduced resolution scan mode. Further, the optical sensors 112 on scanner array bar 114 in this embodiment may complete the sheet sizing detection according to accelerated and/or reduced resolution scanning in the fast and slow scanning directions, resulting in more rapid sheet size detection than is possible with conventional full resolution image sheet scanning. In these embodiments, the "Document Fed Initiate" and "Clock" blocks shown in Figure 2 are bypassed, due to the accelerated and/or reduced resolution scanning in the fast and slow scanning directions by sensor bar 114 of imaging system 110.

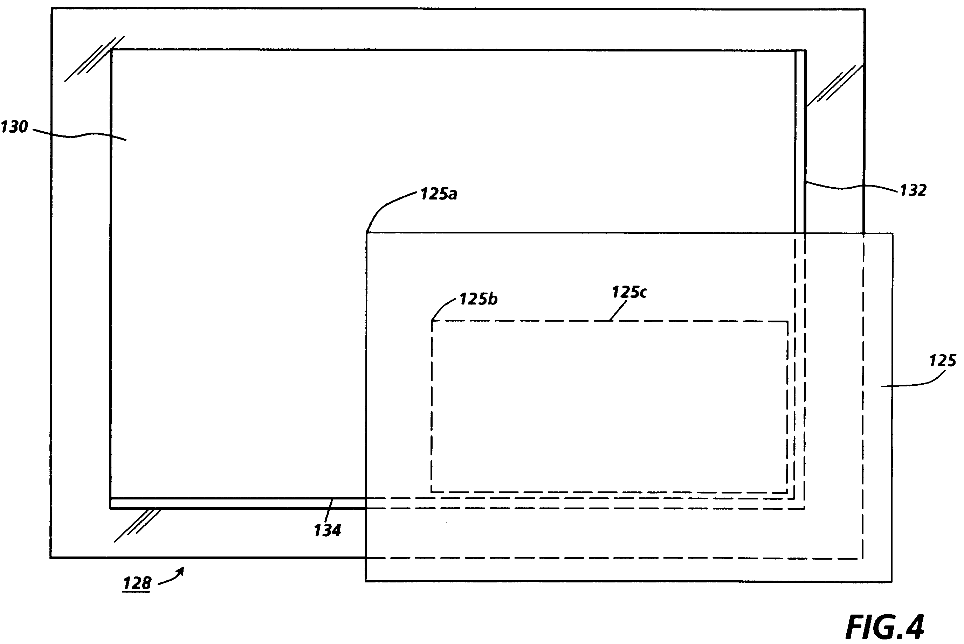

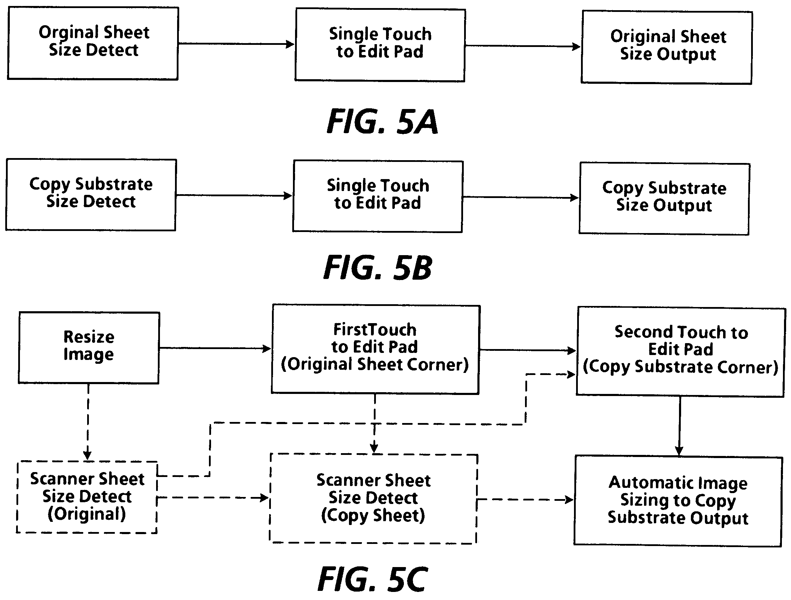

Figures 5A, 5B and 5C show block diagrams of the document sheet size detection systems of the present invention as may be employed with an edit pad as described in conjunction with Figures 3 and 4, as well as with the scanner sheet size detection systems shown and described above in conjunction with Figures 1 and 2. The edit pad sheet size detection system may be implemented without additional hardware in many input and edit pad systems. As shown in Figures 5A-5C, according to entries on the edit pad, a user interface, pushbuttons or other sheet or image sizing detection selection means, "Original Sheet Size Detect," "Copy Substrate Size Detect," "Resize Image" or other related functions may be chosen by a user.

With reference to Figures 3 and 4, other embodiments of the quick input sheet sizing system of the present invention are shown. Platen backing 128 as shown in Figures 3, 4 and 6 may serve as the support member for edit pad surface 130. As with many previously disclosed two or three dimensional edit pads, inputs to edit pad surface 130 which interfaces with a printing, scanning of copying machine can be made by touching edit pad with a finger, edit pen, or other object. Edit pad surface 130 may be mounted in any location, such that, for example, when scanner 100 is employed with an electrophotographic printing machine such as shown in Figure 6, it may be simultaneously employed with scanner 100 in sheet sizing detection or input, as later described. Edit pad surface 130 is framed on two adjacent sides by sheet width guide 132 and sheet length guide 134, which preferably protrude above the plane of edit pad surface 130. Sheet width guide 132 and sheet length guide 134 preferably have an upper surface that is black, darkened, colored, textured or otherwise configured so as to the extent possible be distinguishable through sheet 125 when it is placed over them (see Figure 4).

Figure 3 shows sheet 125 positioned adjacent to sheet width guide 132 and sheet length guide 134, such that when a user touches point 125a at the corner of the sheet, the precise dimensions of sheet 125 are inputted into UI 14 or IPS 12 as shown in Figure 6, or a separate processor. In this manner, a single touch to a point on edit pad surface 130 automatically detects a two dimensional actual or desired copy sheet size. As shown in Figure 4, an image area of an original (such as a centered area 125c of sheet 125 or any area on edit pad surface 130) as may be defined by four points may be selected. These four points of the thus designated area on edit pad surface 130 include the single point 125b selected on edit pad surface 130, the corresponding width point on edit pad sheet width guide 132, the corresponding length point on and sheet length guide 134 and the intersection point of width guide 132 and length guide 134. The sheet may thereafter be placed on platen 104, fed into scanner 100 sheet feed tray 120 or placed in copy sheet feed tray 56 (see Figures 1 and 6) for scanning or copying. As described in association with Figure 6 above, the various copy sheet selections and detections made on edit pad surface 130 may be used to select sheets from various copy sheet tray(s) 56. In the case of non-standard sheet sizes, the copy sheet path, sheet gripper timing, image transfer and other aspects of copy sheet handling and printing may be automatically modified according to the the edit pad copy sheet size detection system. Copy sheet path sensors (not shown) and processors controlling them in a printer may also be reprogrammed so as to prevent misfeeds or misfeed indications resulting from a non-standard (or standard) copy sheet sizes being used in the printing machine. When a user merely wishes to select a copy sheet (or printed image) size, a scanned input area size, or any other rectangular area on edit pad surface 130, only one point need be selected. Figures 5A through 5C describe various sizing systems as may be employed with edit pad surface 130 as shown in Figures 3 and 4.

With reference to Figure 5A, when the user makes a single touch to a point on edit pad surface while in the "Original Sheet Size Detect" mode, the system of the present invention (which may employ UI 14 or IPS 12 as shown in Figure 6, or a separate processor) automatically detects a two dimensional actual or desired original sheet size scan area. In this manner, an original area of an image on a copy sheet (such as the entire area of sheet 125 in Figure 3, a centered area 125c of sheet 125 in Figure 4, or any copy area on edit pad surface 130) as bordered by four points may be selected for scanning. These four points of the selected rectangular area include the single point selected on edit pad surface 130, the corresponding width point on edit pad sheet width guide 132, the corresponding length point on and sheet length guide 134 and the intersection point of width guide 132 and length guide 134. The original sheet may thereafter be placed over platen 104 or fed into scanner 100 (see Figures 1 and 6) for scanning, copying and/or storage in memory. or used to select a copy sheet feed tray

With reference to Figure 5B, when the user makes a single touch to a point on edit pad surface while in the "Copy Substrate Size Detect" mode, the system of the present invention (which also may employ UI 14 or IPS 12 as shown in Figure 6, or a separate processor) automatically detects a two dimensional actual or desired copy sheet size. In this manner, an actual area of an output sheet (such as the entire area of sheet 125 in Figure 3, a centered area 125c of sheet 125 in Figure 4, or any rectangular area on edit pad surface 130) as bordered by four points is selected as the final size of the copied or stored sheet and/or image. These four points of the selected area include the single point selected on edit pad surface 130, the corresponding width point on edit pad sheet width guide 132, the corresponding length point on and sheet length guide 134 and the intersection point of width guide 132 and length guide 134. The copy sheet may thereafter be placed into paper tray(s) 56 (Figure 6), fed into the copy sheet path by a bypass feeder (not shown) or used to select a copy sheet feed tray.

As shown in Figure 5C, when the user makes a first touch to a point on edit pad surface while in the "Resize Image" mode, the system of the present invention (which again may employ UI 14 or IPS 12 as shown in Figure 6, or a separate processor) automatically detects a two dimensional actual or desired original rectangular sheet size scan area. In this manner, an actual area of an original (such as the entire area of sheet 125 in Figure 3, a centered area 125c of sheet 125 in Figure 4) as bordered by four points may be selected for scanning. These four points of the selected area include the single point selected on edit pad surface 130, the corresponding width point on edit pad sheet width guide 132, the corresponding length point on and sheet length guide 134 and the intersection point of width guide 132 and length guide 134. The original sheet may thereafter be placed over a platen (Figure 1) or fed into scanner 100 (Figure 6) for scanning, copying and/or memory storage. As also shown in Figure 5C, when the user makes a second touch to a point on edit pad surface while in the "Resize Image" mode, the system of the present invention (which again, may be a software routine loaded into the UI 14 or IPS 12 as shown in Figure 6, or a separate processor) automatically detects the two dimensional area (the area of sheet 125 in Figure 3, area 125c in Figure 4, or any such area) as bordered by four points that will be used as the copy substrate sheet size. These four points include the single point selected on edit pad surface 130, the corresponding width point on edit pad sheet width guide 132, the corresponding length point on and sheet length guide 134 and the intersection point of width guide 132 and length guide 134. The order of these operations (original size sheet selection versus copy substrate size sheet selection) may again be reversed, according to user or programmer preference.

Figure 5C also shows in phantom (dotted) lines that the use of the scanner sheet size detection systems shown and described above in conjunction with Figures 1 and 2 may also be employed in the quick scan/input sheet/image sizing systems of the present invention. According to block diagram 5C, after selecting "Resize Image," a user may place a sheet in an automatic document feeder, and by then selecting "Scanner Sheet Size Detect (Original)" mode for the original sheet as the first step and/or the "Scanner Sheet Size Detect (Copy)" mode for the copy sheet as the second step (both as detailed in conjunction with Figure 2), scanner 100 can be employed to separately or combined with the edit pad to select/detect copy sheet size, resize images and/or original sheets onto various copy sheets. The various copy sheet selections and detections made may be used to select sheets from various copy sheet tray. In the case of non-standard sheet sizes, the copy sheet path, sheet gripper timing, image transfer and other aspects of copy sheet handling and printing may be automatically modified according to the copy sheet size detection system of the present invention. Copy sheet path sensors (not shown in Figure 6) and processors controlling them in a printer can be automatically reprogrammed so as to prevent misfeeds or misfeed indications resulting from varied copy sheet sizes being used in the printing machine. The document sheet size detection and printer reprogramming system of the present invention as may be employed with edit pad 128 as described in conjunction with Figures 3 and 4 above, as well as the scanner sheet size detection systems shown and described above in conjunction with Figures 1 and 2. As set forth above in conjunction with Figure 1, although sensors may be used to detect when sheet 125 has been placed in sheet entry slot 122 of scanner 100, such sensors are not required, as a user may be instructed to place a sheet in sheet entry slot 122 or tray 120 before initiating the "Scanner Sheet Size Detect" mode.

## Claims

1. A printing system adapted to print indicia on sheets, comprising:
a sheet feeder having a stack of the sheets;
a printer adapted to receive the sheets from said sheet feeder; and
input means, located remotely from said sheet feeder, for determining the sheet size of one of the sheets, said printer being responsive to the sheet size determined by said inputting means for printing the indicia on the sheets.

2. The printing system of claim 1, wherein said inputting means detects a width and a length of the sheet according to designation of an input point.

3. The printing system of claim 1 or 2, wherein said inputting means comprises (1) an edit pad including a substantially planer surface for accepting the input point at an x coordinate and a y coordinate, said surface having thereon a predetermined base point, with the base point having a first line of points x extending therefrom on said surface along an x coordinate axis and a second line of points y extending therefrom on said surface along a y coordinate axis, or (2) a scanner for detecting the sheet size.

4. The printing system of claim 3, further comprising a processor, operably connected to said edit pad, for selecting an individual x point on the first line of x points and an individual y point on said second line of y points, said processor detecting the width of the sheet according to a distance between the base point and the individual x point on the first line of x points and the length of the sheet according to a distance between the base point and the individual y point on the second line of y points.

5. The printing system of any of claims 1 to 4, wherein said sheet feeder comprises a sheet feed tray for holding a the stack of sheets.

6. The printing system of any of the preceding claims, comprising:
a first sheet guide for positioning a first edge of the sheet adjacent to the first line of points x extending along the x coordinate axis on said surface of said edit pad; and
a second sheet guide for positioning a second edge of the sheet adjacent to the second line of points y extending along the y coordinate axis on said surface of said edit pad.

7. The printing system of claim 3(2) or any claim dependent thereon, comprising: a controller including a clock for determining a duration between a first signal and a second signal, with the first signal being provided to said clock by said scanner in response to detecting a lead edge of the sheet, and the second signal being provided to said clock by said scanner in response to detecting the trail edge of the sheet, whereby said controller determines a length of the sheet as a function of the duration between the first signal and second signal, said scanner detects a distance between an inboard edge and an outboard edge of the sheet and generates an inboard edge signal and an outboard edge signal, said controller determining a width of the sheet as a function of the inboard edge signal and outboard edge signal.

8. The printing system of claim 7, further comprising a sheet size indicator for displaying the width and the length of the sheet, wherein said processor provides a set of sheet width and length data to said indicator.

9. The printing system of claim 7 or 8, wherein said processor comprises a memory for storing at least one electronic image, corresponding to the sheet size.

10. A method of printing indicia on sheets using a printing system, said comprising a sheet feeder having a stack of the sheets, including the steps of:
receiving the sheets from said sheet feeder; and
determining the sheet size of one of the sheets, said printer being responsive to the sheet size determined by said inputting means for printing the indicia on the sheets.
